# EUROPEAN PATENT APPLICATION

(11) **EP 0 923 040 A2**
(43) Date of publication of application: **16.06.1999**
(21) Application number: 98310027.2
(22) Date of filing: 08.12.1998
(51) Int. Cl.: G06F 17/60

(54) **Digital information system and portable device therefor**

(30) Priority: 12.12.1997 US 69523 P
(71) Applicant: TEXAS INSTRUMENTS INC., Dallas, Texas 75243 (US)
(72) Inventor: Linn, John L., Richardson, Texas 75082, (US); McMahan, Michael L., Plano, Texas, 75074 (US); Wrappe, Thomas K., Plano, Texas 75075 (US)
(74) Representative: Harris, Ian Richard

(57) **Abstract**

An electronic business card (10) is disclosed which is comprised of a digital information transmitter (DIT) for transmitting a digital pointer in the form of a pointer (12). This pointer defines a location remote from the receiving device, which location contains information regarding the cardholder. The receiving node comprises an application processor with an associated memory for storing the digital pointer, which application processor is operable to access the remote location through a wireless link to retrieve the information associated with the digital pointer. Therefore, the cardholder need only update the remote database without having to actually update the card, since the digital pointer is a personal pointer that is associated with the individual at all times, even though information about the individual may change.

## Description

### TECHNICAL FIELD OF THE INVENTION

The present invention pertains in general to personal information systems and to portable devices associating unique information about an individual with that individual.

### BACKGROUND OF THE INVENTION

In most business transactions, an individual will carry on their person some information regarding themselves such that another individual entering a business transaction with that person will have sufficient information to go forward with the transaction. In most instances, this can be as simple as a business card which contains the person's name, address and company affiliation. However, it could also contain such things as a curriculum vitae', a company brochure and other "self-serving" information about that individual. Prior to providing this information to another party, the individual must ensure that it is updated. In some instances, this requires destroying a whole set of business cards and printing new cards due to either a change of address or a change of affiliation. Further, once this information has been transmitted to the other party, the relevancy of that information is somewhat time-sensitive. After a certain time period, a percentage of business cards in the possession of any party will be inaccurate due to a change of address, a change of phone number, etc. In fact, the public telephone companies frequently change area codes to accommodate increased demands. Thus, to maintain oneself current with their client base or their general network of individuals, it is necessary to constantly provide some updating as to current information for that individual.

With respect specifically to business cards, the typical way to transmit information with a business card is to provide a printed card. However, a business card only allows so much information to be printed on that card. Initially, business cards contained nothing more than the name, business affiliation, address, and phone number. This quickly led to the inclusion of a telex number and a fax number. Currently, almost all individuals also provide an e-mail address and a mobile telephone number. If a second business address is required, this is sometimes included, in addition to such things as home telephone numbers and home addresses. For individuals dealing with different countries, the reverse side of the card may even have a translation of the information on the card in a particular foreign country's language. The problem, therefore, with a conventional business card is the lack of space within which to transmit sufficient information about an individual in the current business climate.

To increase the amount of information that can be contained on a small card carried upon the person, some techniques have been developed. One such technique is that of optically encoding a large amount of digitized information onto the face of the card. This technique utilizes a pattern that is unrecognizable to an individual, but can be optically scanned. These have typically been utilized on driver's licenses for security purposes to prevent copying of such. Another technique is to utilize a "smart card" which allows a large amount of digital information to be disposed on the card in a memory device incorporating integrated circuit technology. This information is sometimes utilized to contain such things as medical history and the such. The disadvantage to these types of systems is that they attempt to provide current information about an individual on a local database that requires no access to the central system that created the database. Therefore, the individual reading the information, such as a medical professional in an emergency situation, will have to assume that the information is current.

### SUMMARY OF THE INVENTION

Particular and preferred aspects of the invention are set out in the accompanying independent and dependent claims. Features of the dependent claims may be combined with those of the independent claims as appropriate and in combinations other than those explicitly set out in the claims.

An embodiment of the invention can provide an electronic business card for containing a digital pointer of an individual that can be utilized to update information about that individual.

A portable device according to an embodiment of the invention can provide a digital pointing device including a portable media which can be carried by an individual. This individual is associated with the portable media and the portable media has a digital pointer contained therein. This digital pointer represents location information relating to unique information about the associated individual. An interface mechanism in the portable media is operable to interface with a communication link for transmitting the digital pointer thereto. Receiving apparatus separate from the portable media is operable to interface with the communication link and receive therefrom the digital pointer. The receiving apparatus includes an application processor for utilizing the digital pointer in accordance with a predetermined application. The receiving device also includes a remote access mechanism for accessing a remote location defined by the location information in the received digital pointer, and for retrieving the unique information from the remote location corresponding to the digital pointer for use by the application processor.

The location information can relate to the location of a remote database. This remote database has information stored therein as to the unique information about the associated individual. The digital pointer also has associated therewith ancillary data which corresponds to a portion 20 of the remote database. When transmitting the digital pointer to the communication link, this ancillary data is transmitted also, which ancillary data can be utilized by the application processor upon receipt thereof.

The receiving apparatus can initiate access to the remote location immediately upon receipt of the digital pointer. Alternatively, the application processor can control the operation of accessing the remote database after receiving the digital pointer.

### BRIEF DESCRIPTION OF THE DRAWINGS

For a more complete understanding of the present invention and the advantages thereof, reference is now made to the following description taken in conjunction with the accompanying Drawings in which:
FIGURE 1 illustrates a block diagram of the system of the present invention;
FIGURE 2 illustrates a more detailed block diagram illustrating the interface thereof with a global network;
FIGURE 3 illustrates a block diagram of the application processor;
FIGURE 4 illustrates a more detailed block diagram of digital information transmitter;
FIGURE 5 illustrates a diagrammatic view of the transfer of data from a main database through the digital information transmitter to an application database;
FIGURE 6 illustrates a flow chart for the operation of transferring information from the digital information transmitter to the application database; and
FIGURE 7 illustrates a flow chart of an alternate application.

### DETAILED DESCRIPTION OF PARTICULAR EMBODIMENTS

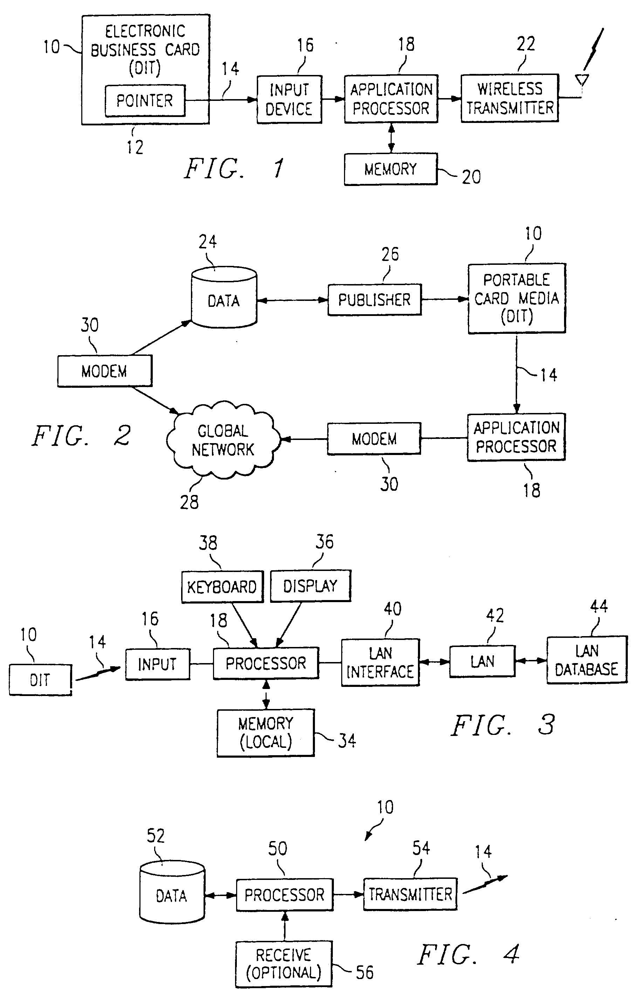

Referring now to FIGURE 1, there is illustrated a block diagram of the electronic business card system of the present invention. Generally, an electronic business card 10 is provided for digitally storing select digitized information that can be transmitted to a receiving device, which electronic business card comprises a digital information transmitter (DIT). This is a portable device that is carried by an individual that has associated therewith a pointer 12, which pointer 12 contains the digitized information that allows a peripheral system having access to the DIT 10 to access information about the card holder. This pointer is downloaded from the DIT 10 through a communication link 14 through an input device 16 to an application processor 18. The application processor 18 has a local memory 20 for storing the pointer 12 and its associated information. The application processor 18 also has the ability to access through a network interface 22 to a local area network (not shown).

The pointer 12 is utilized by the application processor 18 to determine the location on a network of a remote location from which it can access information related to the DIT 10 and the card holder, this pointer therefore providing location information or routing information defining a recipient of unique card holder information for delivery from the remote location to the requesting location, *i.e.,* the application processor 18. The pointer 12 does not necessarily carry with it any ancillary information about the individual, although it may. The pointer 12 primarily provides information as to a remote database at the remote location that contains information that is pertinent to that individual or card holder. Therefore, anytime the application processor 18 decides to update its memory 20 with information relating to the holder of the DIT 10, it is only necessary to access the network through the interface 22 to retrieve this information. Therefore, it is not necessary to carry the information with the DIT 10 but, rather, it is only important to obtain the location information associated with the pointer 12 defining the route over the network to the remote location.

Referring now to FIGURE 2, there is illustrated a more detailed diagrammatic view of the overall system for retrieving information. There is provided a remote database 24, which remote database 24 contains information regarding a given cardholder. A publisher 26 will take the information in the database 24 and create a pointer to that database for a given electronic cardholder. The pointing information is embedded within the DIT 10 by the publisher 26, which pointing information is then transmitted to the application processor 18 via the communication link 14 and the input device 16. The application processor is then interfaces with, for example, a global network 28 through a modem 30, modem 30 constituting the wireless interface device 22. The global network 28 then communicates with the remote database 24 through its modem 30. Therefore, the DIT 10 need carry no information other than a pointer or location device to that information on the network. This information is provided to the application processor 18, and the application processor 18 can then utilize this information to access that information from the designated location defined by the DIT 10.

Referring now to FIGURE 3, there is illustrated a more detailed block diagram of the application processor. The DIT 10 will interface through a wireless communication link 14 to the application processor 18. The application processor 18 can be any type of personal computer or general computing device. This has a local memory 34, which local memory 34 comprises the memory 20 of FIGURE 1. In this example, the application processor 18 has associated therewith a display 36 and a keypad 38. A local area network (LAN) interface 40 is provided for interfacing with a LAN 42, which LAN 42 allows a general LAN database 44 to be accessed. This LAN database 44 is the database that is utilized to create the DIT 10. The communication link 14 can be effected via an infrared link requiring a low-cost, battery-powered infrared transmitter at DIT 10 and an associated receiver on the input device 16, or it could be a low-powered radio transmitter, similar to those currently available on radio tags. An optical interface could be utilized with the optical bar codes and various scanning technologies for the input device 16. Ultrasonic techniques could also be utilized, as well as a direct electrical contact providing electrical signals through wires, capacitive coupling, or galvanic coupling.

The information that is transmitted from the DIT 10 to input device 16 comprises at a minimum a digital pointer that is associated with a particular person, the cardholder, although the pointer could be some type of encoded analog signal. The pointer can be a serial number; a URL, or some other method of indexing the individual's information content with the pointer, this indexing providing the necessary information for the receiving device to find the database at the remote location. In addition, as will be described hereinbelow, additional information can be transmitted with the pointer, such as name, company and phone number.

This additional information that can be transmitted with the signature is referred to as "ancillary" information or data. This ancillary information can be utilized to populate the database or, alternatively, it can be utilized to organize the database or filter the database. From the standpoint of organizing the data, this information may provide organizational information to the database. From the standpoint of a filter, this ancillary information can be utilized to actually determine what the next step should be. For example, if the ancillary information included the name of an individual, there could be a filter containing names that are desirable and names that are undesirable. If a name is desirable, the filter will then take the action of accessing the remote database over the network to access the information at the pointed-to location associated with that individual. However, if the name is not selected by the filter or is rejected by the filter, this indicates to the system that the step of accessing the remote database is undesirable and there is no reason to keep this information. This filter could work for other purposes, such that only the name and the pointer are stored without the requirement of going to the remote database unless the user requests this at a later time.

Referring now to FIGURE 4, there is illustrated a more detailed block diagram of the DIT. In general, a relatively "smart" card would have associated therewith a processor SO. This would actively access data stored in a data block 52, which would then be output to a transmitter 54. The processor 50 would provide this information in response to some activation input, or could operate in a broadcast mode. However, for the purposes of battery consumption, this would be minimal. In addition, an optional receiver 56 could be provided for allowing data to be input to the card. Alternatively, the DIT 10 could be a passive device such as an optical device wherein the information would be read with various optical scanning techniques.

One application of the card could be merely for updating a Personal Information Manager (PIM) for entering information into a database. Alternatively, it could be utilized for maintaining information about participants at a given conference. Presently, this information must be gleaned from a collection of business cards of participants. The present invention allows these cards to have the digital pointers input into an input device, and then have data associated with that particular pointer accessed from a remote location. This allows more than just the information normally carried on business cards to be accessed. For example, it could access photographs, resumes, various company background information, and other personal information about the individual. The cardholder himself could control the information that is provided with the database or, alternatively, a larger information provider could supply this information, the exact contents of which are not necessarily known by the cardholder. For example, once an individual has a digital pointer associated with him, this information can then be utilized by the receiving party in a number of different ways. Primarily, it could be utilized in the way it is meant to be used by the cardholder, i.e., as a pointing device to a database of user-supplied information. Alternatively, it could be utilized to access other information about the individual such as credit verification information, personal background information, financial information, etc. This information would be created in a local database by the receiving party. One example of this would be a credit card company that has access to information to which the cardholder does not necessarily have access. Certain parties having authorization to access this information might be able to access the information without the cardholder's permission. Another example would be medical records to which the cardholder might not have access, but a medical professional would. The primary aspect of the present invention is that a digital pointer be provided, which digital pointer provides location information as to where information about that individual is located. This location can be defined by the cardholder, or it can be defined by the receiving party.

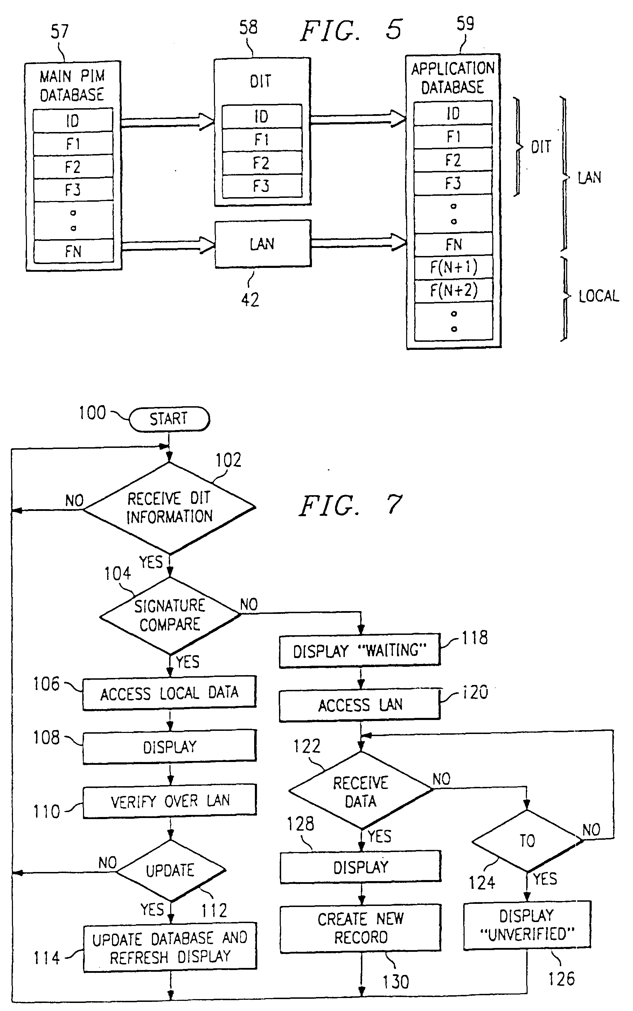

Referring now to FIGURE 5, there is illustrated an example of how an application database can be created utilizing the DIT 10. There is provided a main Personal Information Manager (PIM) database 57, which main database 57 contains all the information that a user would normally associate with a particular digital pointer. This is comprised of a plurality of fields, F1, F2, F3...FN. In addition, there is provided an ID field, which is basically the pointer. When a DIT 10 is manufactured, the minimum data that is placed on the DIT 10 is the ID field. However, there can be provided additional fields which is illustrated in a DIT database 58. This additional fields would be fields F1, F2 and F3. When the DIT database 58 is accessed, it transfers information to the application processor 18, which creates an application database 59. This application database 59, in the example illustrated in FIGURE 5, provides for a minimum of the fields F1, and F3. However, the application database 59 need not actually utilize these three fields, nor does it need to store these three fields. It, however, is important to note that the only information that the application database 59 can obtain from the DIT is the fields F1, F2 and F3, in addition to the ID. To provide more information than these three fields, the application processor 18 will need to access the LAN 42, or the main database 57. It does this via the LAN 42, where the remaining fields up to and including FN can be accessed. This additional information can fill in other information fields relating the cardholder, such as information regarding a photograph, family background, etc. Additionally, there are provided additional fields, F(N+1), F(N+2), etc., which are generated by the application processor 18 locally. This can be such things as notes that are associated with the individual or other information that is not contained in the main database. This can be generated locally by the processor 18 or it could actually be contained in another database that is not associated with the main database 59, nor at the same location. It need only be associated with the specific ID associated with the DIT 10 that has the database 59 associated therewith.

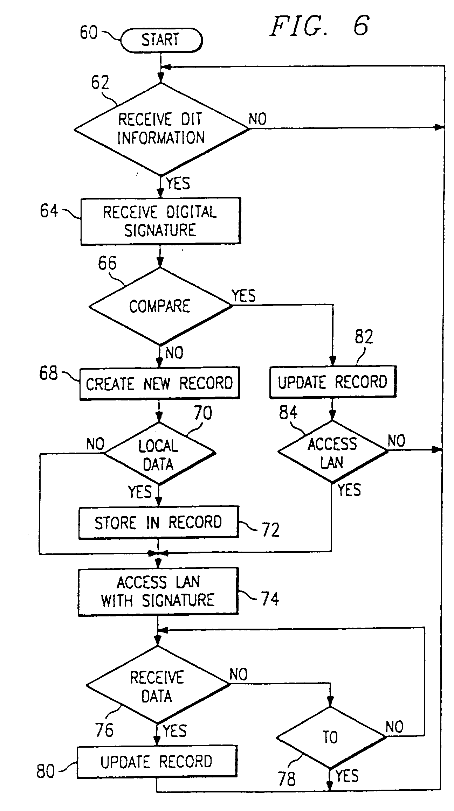

Referring now to FIGURE 6, there is illustrated a flow chart depicting the operation of DIT 10 and downloading information to the application processor 18, which application processor 18 can be any type of application that accesses information regarding the cardholder utilizing the pointer 12 that is associated with the DIT 10. The program is initiated at a Start block 60 and then proceeds to a decision block 62 to determine if DIT information has been received. If not, then the program will flow along the "N" path back to the input of decision block 62. When data is received, the program will flow along a "Y" path to a function block 64 to receive the digital pointer, and then to a decision block 66 to determine if the received digital pointer compares to one already in the local database of the receiving site. If there is no comparison, this indicates that there is no record of the cardholder. The program will then proceed along a "N" path to a function block 68, wherein a new record will be created, and then to a decision block 70 to determine if there is additional data over and above the digital pointer. If so, the program will flow along a "Y" path to a function block 72, wherein this additional data will be stored in the record. If not, the program will flow along an "N" path to a function block 74, this also being the path from the function block 72. In function block 74, the LAN 42 is accessed utilizing the location information in the digital pointer to access the remote database. This digital pointer in the preferred embodiment contains location information that defines to the application processor 18 a remote location having data that is downloadable to the application processor 18 over the LAN 42 for that particular cardholder. However, the information could be nothing more than routing information defining a particular route to take over a network.

After the LAN 42 is accessed, the program will flow to a decision block 76 to determine if the data has been received from the LAN 42. If not, the program will loop back around to the input of the block 76 through a timeout block 78 until data is received. However, if data is not received within a predetermined time period, the program will flow back to the input of decision block 62 to await additional data information, i.e., the card will again be scanned. When data is received, the program will flow along a "YI" path to a function block 80 to update the record with information from the LAN 42. The program will then flow back to the input of decision block 62.

In the event that data was already stored in the system when the digital pointer was received, the program would flow from decision block 66 along the path to a function block 82 to update the previously created record. The program will then flow to a decision block 84 to determine if the LAN 42 should be accessed. In certain situations, the mere receipt of a digital pointer does not necessarily require updating of the record. There may be sufficient information in the ancillary information on the card to provide new updated information, or the digital pointer may be all that is required to access a local database. However, m some situations, the LAN will always be accessed upon receipt of the digital pointer. In this situation, the program will flow along the "Y" path to the function block 74 to access the LAN 42 with the digital pointer. If the LAN need not be accessed, the program will flow along the "N" path from the decision block 84 to the input of decision block 62.

Referring now to FIGURE 7 there is illustrated a flow chart depicting one application of the present system. The program would be initiated at a Start block 100, and then flow to a decision block 102 to determine if DIT information has been received. If not, the program will loop back around to the input and, if so, the program will flow along a "Y" path to a decision block 104 to determine if there is a valid comparison of the pointer. If so, the program will flow along the "Y" path to a function block 106 to access the local data and then display this local data, as indicated in function block 108. As an example of this situation, a business card may be utilized to gain access to a convention. The digital pointers could have been previously stored by, for example, having previously attended the conference.

After display of the information the program will then flow to a function block 110 to verify the information over the LAN 42. This verification procedure would basically require that the user's information be constantly updated over the LAN 42 to determine if there were any changes within the user's information. This could be as simple as credit card information. The program will then flow to decision block 112 to determine if an update operation is to be performed. If not, the program will flow back to the input of decision block 102 and, if so, the program will flow along the "Y" path to function block 114 to update the database and then refresh the display. The program will then flow back to the input of decision block 102.

If there had not been a pointer to compare in decision block 104, the program would flow to a function block 118 to display a message indicating that there was some ongoing process to verify the recipient. The program will then flow to the function block 120 to access the LAN 42 and then to the function block 122 to determine if data had been received. If not, the program would flow back to the input of decision block 122 through a timeout block 124. If a timeout occurred, the program would flow along a path to a function block 126 to display a message indicating that the card could not be verified at the present time, and some other procedure must be implemented. However, once data has been received, this data would be displayed, as indicated by function block 128. The program would then flow to a function block 130 to create a new record, and then flow back to the input of decision block 102.

The digital pointer, as noted above, provides location information for use by the receiving device in order to access unique information about the individual or the cardholder from a remote location. For security purposes, the ancillary information that can be transmitted with the digital pointer can include an actual digital signature, this digital signature utilizing conventional encryption techniques which is utilized for carrying out electronic transactions over various networks. Upon receiving the digital signature and the digital pointer, the digital signature can be stored along with the digital pointer. When accessing the remote database for the unique information about the cardholder, the digital signature can be transmitted to the remote database and, the remote database can then verify the digital signature prior to transmitting information back to the requesting site. By utilizing a digital signature, a much higher level of security can be provided.

In summary, there has been described an electronic business card that incorporates a digital pointer associated with the cardholder. This electronic business card has the ability to transmit this digital pointer to a receiving system. The receiving system provides a wireless interface to a network which wireless interface utilizes the pointer as a "pointing" device on a network. This pointing device provides routing information that allows the wireless interface to determine where on the network information associated with that cardholder would be kept. As such, a cardholder need only update a central database to effectively update not only his own business card, but all individuals that have stored his digital pointer.

Although the preferred embodiment has been described in detail, it should be understood that various changes, substitutions and alterations can be made therein without departing from the scope of the invention.

## Claims

1. A digital information system comprising:
a portable device for being carried by an individual associated with said portable device, said portable device having a digital pointer representing location information relating to unique information about the associated individual;
receiving apparatus for interfacing with said portable device for receiving said digital pointer therefrom, said receiving apparatus comprising:
an application processor for utilizing said digital pointer in accordance with a predetermined application; and
remote access means for accessing a remote location defined by said location information in said received digital pointer and for retrieving said unique information from said remote location corresponding to said digital pointer for use by said application processor.

2. A digital information system according to Claim 1, wherein said location information relates to the location of a remote database, which remote database has information stored therein as to said unique information about the associated individual.

3. A digital information system according to any one of the previous claims, wherein said location information comprises routing information over an alternate communication link to said remote database.

4. A digital information system according to any preceding claim, wherein said communication link comprises a global communication network and said database has an address on said global communication network.

5. A digital information system according to any preceding claim, wherein said digital pointer has associated therewith ancillary data which corresponds to a portion of said unique information stored in said remote database, and said interface device is operable to transmit both said digital pointer and said ancillary data when interfaced with said communication link.

6. A digital information system according to any preceding claim, wherein said portable device comprises interface means for interfacing with said receiving apparatus via a communications link.

7. A digital information system according to Claim 6, wherein said interface means is operable to transmit said digital pointer to said communication link upon receiving a request from said receiving apparatus for said digital pointer.

8. A portable device for a digital information system according to any one of Claims 1 to 6, the portable device comprising a digital pointer representing location information relating to unique information about a user associated with said portable device.

9. A portable device according to Claim 8, comprising interface means for interfacing with receiving apparatus via a communications link.

10. A portable device according to Claim 9, wherein said interface means is operable to transmit said digital pointer to said communication link upon receiving a request from said receiving apparatus for said digital pointer.

11. A portable device according to any one of Claims 8 to 10 in the form of an electronic business card.

12. A method for providing information about an individual, comprising the steps of:
providing a portable device that is able to be carried by the individual, which individual is associated with said portable device;
disposing a digital pointer on said portable device representing location information relating to unique information about said associated individual;
interfacing said portable device with a communication link and transmitting said digital pointer thereto;
receiving said digital pointer from said communication link by receiving apparatus;
utilizing said digital pointer at receiving apparatus in an application processor operating in accordance with a predetermined application; and
accessing a remote location from said receiving apparatus, which remote location is defined by said location information in said received digital pointer, and retrieving said unique information from said remote location corresponding to said digital pointer for use by said application processor.

13. A method according to Claim 12, wherein said location information relates to a location of a remote database, which remote database has information stored therein as to said unique information about said associated individual.

14. A method according to Claim 12 or Claim 13, wherein said location information comprises routing information over an alternate communication link to said remote database.

15. A method according to any one of Claims 12 to 14, wherein said digital pointer has associated therewith ancillary data which corresponds to a portion of said unique information stored in said remote database, and in the step of interfacing with the communication link, both said digital pointer and said ancillary data are transmitted.
